(19) Europäisches Patentamt
European Patent Office
Office européen des brevets

(11) **EP 3 728 385 B1**

(12) **EUROPÄISCHE PATENTSCHRIFT**

(45) Veröffentlichungstag und Bekanntmachung des Hinweises auf die Patenterteilung:
**11.05.2022 Patentblatt 2022/19**

(21) Anmeldenummer: **18815710.1**

(22) Anmeldetag: **12.12.2018**

(51) Internationale Patentklassifikation (IPC):
**C08G 18/76** (2006.01)   **C08G 63/66** (2006.01)
**C08G 18/10** (2006.01)   **C08G 18/44** (2006.01)

(52) Gemeinsame Patentklassifikation (CPC):
(C-Sets verfügbar)
**C08G 18/44; C08G 18/10; C08G 18/7671;
C08G 63/66; C08G 64/0208; C08G 64/305** (Forts.)

(86) Internationale Anmeldenummer:
**PCT/EP2018/084517**

(87) Internationale Veröffentlichungsnummer:
**WO 2019/121218 (27.06.2019 Gazette 2019/26)**

(54) **POLYCARBONATPOLYOLE, POLYISOCYANATPREPOLYMERE UND POLYURETHAN- UND POLYURETHANHARNSTOFFELASTOMERE AUF DEREN BASIS**

POLYCARBONATE POLYOLS, POLYISOCYANATE PREPOLYMERS AND POLYURETHANE AND POLYURETHANE UREA ELASTOMERS BASED THEREON

POLYOLS DE POLYCARBONATE, PRÉPOLYMÈRES DE POLYISOCYANATE ET POLYURÉTHANES DE POLYURÉTHANE-URÉE ET ÉLASTOMÈRES DE POLYURÉTHANE-URÉE À BASE DESDITS POLYOLS DE POLYCARBONATE, PRÉPOLYMÈRES DE POLYISOCYANATE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2017   EP 17208595**

(43) Veröffentlichungstag der Anmeldung:
**28.10.2020   Patentblatt 2020/44**

(73) Patentinhaber: **Covestro Deutschland AG
51373 Leverkusen (DE)**

(72) Erfinder:
• **NEFZGER, Hartmut
50259 Pulheim (DE)**
• **KNAUP, Harald
41469 Neuss (DE)**
• **HUBER, Hans-Peter
50769 Köln (DE)**
• **STUMPF, Andreas
Dubai (AE)**
• **REITER, Stephan
40764 Langenfeld (DE)**

(74) Vertreter: **Levpat
c/o Covestro AG
Gebäude 4825
51365 Leverkusen (DE)**

(56) Entgegenhaltungen:
**EP-A2- 0 421 217     EP-B1- 0 421 217
DE-A1- 3 717 060     DE-A1-102006 002 154**

(52) Gemeinsame Patentklassifikation (CPC): (Forts.)

    C-Sets
    **C08G 18/10**

**Beschreibung**

Die vorliegende Erfindung betrifft neue hochwertige Polycarbonatpolyole, Verfahren zu deren Herstellung, daraus zugängliche Polyisocyanatprepolymere sowie Polyurethan (PUR)- und Polyurethanharnstoffelastomere, die in besonders anspruchsvollen Anwendungen einzigartige Kombinationen aus Verarbeitungsverhalten, Hydrolyse- und Oxidationsstabilität, mechanisch und mechanisch-dynamischen Eigenschaften aufweisen.

Polyurethanelastomere wurden vor über 60 Jahren erstmals basierend auf 1,5-Naphthalindiisocyanat (NDI; Desmodur® 15 von Covestro Deutschland AG) einem langkettigen Polyesterpolyol und einem kurzkettigen Alkandiol unter dem Handelsnamen Vulkollan® kommerzialisiert.

Als langkettige Polyole kommen neben Polyesterpolyolen auch Polyetherpolyole, Polycarbonatpolyole und Polyetheresterpolyole zum Einsatz. Die Wahl des langkettigen Polyols richtet sich hauptsächlich nach den Erfordernissen der jeweiligen Anwendung. Man spricht in diesem Zusammenhang auch von "maßgeschneiderten Eigenschaften". So werden z.B. Polyetherpolyole verwendet, wenn Hydrolysestabilität und Tieftemperatureigenschaften im Vordergrund stehen. Für Polyesterpolyole ergeben sich bezüglich der mechanischen Eigenschaften und UV-Stabilität gegenüber Polyetherpolyolen Vorteile. Nachteilig ist jedoch beispielsweise die geringe Mikrobenbeständigkeit. Polycarbonatpolyole kombinieren in gewisser Weise die Vorteile von Polyether- und Polyesterpolyolen, sind aber dazu im Vergleich relativ teuer.

Die Vorteile der Polycarbonatpolyole liegen insbesondere in ihrer UV-Stabilität, Hydrolysestabilität und ihren mechanischen Eigenschaften.

Nachteilig an Polyester- und Polycarbonatpolyolen sowie an ihren Mischtypen, den Polyestercarbonatpolyolen, gegenüber den Polyetherpolyolen ist deren meist weniger vorteilhaftes Tieftemperaturverhalten. Dies ist strukturell bedingt und rührt von der erhöhten Polarität der Carbonylgruppen her, die normalerweise dazu führt, dass Polyester- und Polycarbonatpolyole teilkristallin sind, wohingegen Polyetherpolyole, insbesondere die auf Propylenoxid basierten Typen als kommerziell größte Gruppe, amorph sind. Mit der bekannten empirischen Regel von Beaman und Bayer (M.D. Lechner, K. Gehrke u. E.H. Nordmeier, Makromolekulare Chemie, Birkhäuser Verlag 1993, S. 327)

$$T_g = 2/3\ T_m \qquad\qquad ( I )$$

wird für teilkristalline Systeme der Zusammenhang zwischen der Glasübergangstemperatur, ($T_g$) und der Schmelztemperatur, ($T_m$) verdeutlicht. Weisen beispielsweise Polycarbonatpolyole Schmelztemperaturen der teilkristallinen Anteile von ca. 70°C (343K) auf, so liegen die Glasübergangstemperaturen der amorphen Bereiche in der Größenordnung von - 43°C (230 K). Diese Werte gelten weitgehend auch dann, wenn die Polycarbonatpolyole als Weichsegmentpolyole in segmentierten Multiblockcopolyurethanen, z.B. in Form von thermoplastischen Polyurethanelastomeren (TPU) oder Polyurethangießelastomeren in eingebauter Form vorliegen. Hieraus wird deutlich, dass es wünschenswert ist, Polycarbonatpolyole zur Verfügung zu stellen, die einen möglichst niedrigen Schmelzbereich aufweisen. Zum einen wird dadurch die Verarbeitung erleichtert und zum anderen wird der Gebrauchstemperaturbereich in Folge der dann ebenfalls abgesenkten Glasübergangstemperatur zu tieferen Temperaturen hin erweitert.

Der Bereich der Gebrauchstemperatur wird nach oben hin durch das thermische Verhalten der Hartsegmente (z.B. Urethan-, Harnstoff-, Isocyanurat-Gruppen etc.), d.h. der Strukturelemente, die auf die Polyisocyanatbausteine zurückgehen, begrenzt.

Nachteilig am Einsatz von 1,6-Hexandiol als Diolkomponente für beispielsweise Polycarbonat- oder Polyadipatpolyole, wie sie in der Polyurethanchemie Verwendung finden, ist die erhöhte Viskosität und der vergleichsweise hohe Schmelzpunkt bei ansonsten identischen Kenngrößen (Molekulargewicht und Funktionalität).

Es hat nicht an Versuchen gefehlt, den Schmelzbereich des für Polyurethanelastomere technisch wichtigsten Polycarbonatpolyols, des Hexandiolpolycarbonatpolyols, so zu modifizieren, dass spezielle Anforderungen möglichst vieler Anwendungen abgebildet werden können. In DE-A 3717060 wird beispielweise Hexandiol teilweise z.B. durch Hexandiolethereinheiten ersetzt, mit der Folge eines gegenüber reinem Hexandiolpolycarbonatpolyol verminderten kristallinen Anteils und eines zu tieferen Temperaturen hin verschobenen Schmelzbereiches. Nachteilig an diesem Verfahren ist jedoch, dass diese Hexandiolethereinheiten nur sehr aufwendig hergestellt werden können, so dass wichtige Anwendungen nicht wirtschaftlich zugänglich sind.

H. Tanaka und M. Kunimura (Polymer Engineering and Science, Vol. 42, No. 6, S. 1333, (2002)) weisen einen Weg auf, der zumindest den vorgenannten Nachteil beseitigt, indem Copolycarbonatpolyole aus 1,6-Hexandiol und 1,12-Dodecandiol hergestellt werden, die deutlich gegenüber ihren Homopolycarbonatpolyolen abgesenkte Schmelztemperaturen aufweisen. Mit der verwendeten Messmethodik bestimmten sie den Schmelzpunkt von Hexandiolpolycarbonatpolyol zu 47,4°C und von 1,12-Dodecanpolycarbonatpolyol zu 65,5°C, während ein Copolycarbonatpolyol mit einer Zusammensetzung von 70 Gew.-Tle. Hexandiol : 30 Gew.-Tle. 1,12-Dodecandiol bei 29,1°C aufschmilzt, somit eine Absenkung des Schmelzbereiches von 18,3 °C bzw. 36,3°C gegenüber den Homopolymeren vorliegt. In ähnlicher Weise verhalten sich auch die Schmelzwärmen [J/g], die dann ein Minimum aufweisen, wenn das Polycarbonatpolyol aus 70 Teilen Hexandiol und 30 Teilen 1,12-Dodecandiol aufgebaut ist.

DE102006002154A1 offenbart Polyurethan-Polyharnstoff-Beschichtungen.

EP0421217A2 offenbart Elasthanfasern mit hoher Elastizitat and Zähigkeit sowie ein Verfahren zu deren Herstellung.

Trotz dieser im Prinzip vielversprechenden Ansätze, die im Übrigen auch auf daraus aufgebaute thermoplastische Polyurethanelastomere angewendet wurden, konnte sich dieser Weg bislang nicht oder zumindest nicht in nennenswertem Umfang technisch durchsetzen.

Ein wesentlicher Grund hierfür ist, dass insbesondere 1,12-Dodecandiol preislich so ungünstig einsteht, dass der dadurch resultierende Preis des Polycarbonatpolyols bzw. Copolycarbonatpolyols und damit letztendlich des Polyurethanelastomeren so hoch wird, dass die Vorteile, die sich durch Verwendung bzw. Mitverwendung von 1,12-Dodecandiol ergeben können, überkompensiert werden.

Dies bedeutet, dass die evtl. technischen Vorteile zu teuer erkauft werden müssten.

Aufgabe der vorliegenden Anmeldung war es daher, neue Polycarbonatpolyole als Bausteine für Polyurethane, insbesondere Polyurethangießelastomere und/oder thermoplatische Polyurethane bereit zu stellen, deren Ausgangsverbindungen einfach zugänglich und kommerziell breit verfügbar sind und die gleichzeitig eine Hydrolysestabilität und vorteilhafte Tieftemperatureigenschaften sowie ebensolche mechanischen Eigenschaften und UV-Stabilität aufweisen.

Weiterhin ist es Aufgabe der Erfindung, neue Polyurethane zur Verfügung zu stellen, die die vorgenannten Nachteile wie beschränkte Verfügbarkeit und mangelnde Wirtschaftlichkeit nicht aufweisen und die insbesondere auf den neuen Polycarbonatpolyolen basieren.

Gegenstand der Erfindung sind daher Polycarbonatpolyole mit einer OH-Zahl von 40 bis 80 mg KOH/g und einer mittleren Funktionalität von 1,9 bis 2,2 enthaltend das Umsetzungsprodukt aus

A) mindestens einem $\alpha,\omega$-Alkandiol mit 4 bis 8 C-Atomen und

B) mindestens einem Polytetrahydrofuran und

C) Diethylenglykol
mit mindestens einer

D) Carbonylkomponente ausgewählt aus der Gruppe bestehend aus Diarylcarbonaten, Dialkylcarbonaten, zyklischen Alkylencarbonaten und COCh, bevorzugt Diphenylcarbonat, und/oder deren Mischungen.

Die Molmasse des Polycarbonatpolyols liegt erfindungsgemäß im Bereich von 1200 bis 2500 Da. Die bei 75°C gemessene Viskosität der Polycarbonatpolyole liegt zwischen 500 und 5000 mPas, bevorzugt zwischen 1000 und 3500 und besonders bevorzugt zwischen 1500 und 3000 mPas. Die mittlere Funktionalität liegt im Bereich von 1,9 bis 2,2. Dies wird dadurch erreicht, dass man zusätzlich ggf. Monoole oder Polyole zusetzt. Beispiele für Polyole sind in diesem Zusammenhang 1,1,1-Trimethylolpropan und für Monoole 1-Octanol. Funktionalitäten unter 2 können auch dadurch erhalten werden, dass die eingesetzten Dialkyl- und Diarylcarbonate nicht vollständig abreagieren, so dass Alkylcarbonato- bzw. Arylcarbonato-Endgruppen entstehen.

In einer Ausführungsform der Erfindung ist das mindestens eine a, ω-Alkandiol mit 4 bis 8 C-Atomen (A) ausgewählt aus der Gruppe bestehend aus 1,4-Butandiol, 2-Methylpropandiol-1,3, 1,5-Pentandiol, 3-Methylpentandiol-1,5, 1,6-Hexandiol und 1,8-Octandiol, bevorzugt 1,6-Hexandiol, und/oder deren Mischungen.

In einer weiteren Ausführungsform der Erfindung weist das mindestens eine Polytetrahydrofuran (B) zahlenmittlere Molekulargewichte im Bereich von 250 bis 2900 Da, bevorzugt 600 bis 2500, besonders bevorzugt von 650 bis 2000 auf.

In einer anderen Ausführungsform der Erfindung liegt das molare Verhältnis von Carbonatgruppen zu Ethergruppen im Bereich von, 0,2:1 bis 3,5:1 bevorzugt im Bereich von 0,3:1 bis 3:1, besonders bevorzugt im Bereich von 0,4:1 bis 2,8:1.

In einer weiteren Ausführungsform der Erfindung liegt das bei einer für mehr als 4 Wochen bei Raumtemperatur gelagerten Probe ein mittels DSC bei einer Heizrate von 10 °C/min bestimmte Maximum eines Schmelzendotherms im Bereich von 9 bis 59 °C, bevorzugt 10 - 50 °C.

Wie sich in der Praxis gezeigt hat, kann die Umsetzung der Komponenten A), B) und C) mit Diphenylcarbonat als Carbonylkomponente D) jedoch nicht nach den dem Fachmann bekannten Verfahren erfolgen. Normalerweise würde man alle Einsatzstoffe gemeinsam vorlegen und mittels der aliphatischen Hydroxylgruppen die Alkoholkomponente aus dem entsprechenden Carbonat, beispielsweise Phenol aus Diphenylcarbonat, oder HCI aus Phosgen freisetzen und abdestillieren.

Nachteiligerweise hat es sich jedoch gezeigt, dass bei Anwesenheit aller Komponenten in einem Ansatz die Polykondensationsreaktion in erheblichem Umfang gestört ist, d.h. dass im vorliegenden Beispiel die Phenolabspaltung aus Diphenylcarbonat zu einem frühen Zeitpunkt zum Erliegen kommt. Hierdurch wird die angestrebte Molmasse des Polycarbonatpolyols bei Weitem nicht erreicht; des Weiteren weisen solche Produkte Endgruppen auf, die nicht NCO-reaktiv sind, also beispielsweise Phenoxy- und Phenylcarbonatendgruppen. Derartige Produkte sind selbstverständlich als Rohstoffe für die Herstellung von Polyurethanen vollkommen unbrauchbar und damit wertlos.

Es war daher eine weitere Aufgabe der vorliegenden Erfindung, ein Verfahren bereit zu stellen, das die erfindungsgemäßen Polycarbonatpolyole erstmalig, zuverlässig und möglichst einfach zugänglich macht.

Überraschenderweise wurde gefunden, dass eine spätere Zugabe von Komponente B) die oben genannten Nachteile überwindet.

Ein weiterer Gegenstand der vorliegenden Erfindung ist daher ein

Verfahren zur Herstellung von Polycarbonatpolyolen, dadurch gekennzeichnet, dass ein zweistufiges Verfahren angewendet wird, bei dem

in einer ersten Stufe in Gegenwart eines Katalysators ein Zwischenprodukt aus

A) mindestens einem a, $\omega$-Alkandiol mit 4 bis 8 C-Atomen,

C) Diethylenglykol und

D) mindestens einer Carbonylkomponente aus der Gruppe bestehend aus Diarylcarbonaten, Dialkylcarbonaten, Alkylencarbonaten und $COCl_2$, besonders bevorzugt Diphenylcarbonat, und/oder deren Mischungen hergestellt wird und in einer zweiten Stufe mit

B) mindestens einem Polytetrahydrofuran umgesetzt wird.

In der Praxis können Abweichungen zwischen theoretisch berechneter und experimentell bestimmter Hydroxylzahl des Zwischenproduktes auftreten; praktisch unterschreitet die experimentell bestimmte Hydroxylzahl die theoretisch erwartete meist um 3 bis 10 OHZ-Einheiten, kann sie aber in Einzelfällen auch mehr als 10 OHZ-Einheiten unterschreiten, da es beim destillativen Entfernen des abgespaltenen, niedermolekularen Reaktionsproduktes, beispielsweise des Phenols bei Verwendung von Diphenylcarbonat als Carbonylquelle, zu Verlusten von A) $\alpha$, $\omega$-Alkandiolen mit 4 bis 8 C-Atomen und C) Diethylenglykol kommen kann. Diese Verluste können zum Einen dadurch ausgeglichen werden, dass man diesen Verlust in Vorversuchen ermittelt und dementsprechend mehr der Substanzen A) a, $\omega$-Alkandiolen mit 4 bis 8 C-Atomen und C) Diethylenglykol einsetzt, d.h. eine höhere Hydroxylzahl berechnet als eigentlich gewünscht, oder zum Anderen die zu niedrige, experimentell gefundene Hydroxylzahl des Zwischenproduktes dadurch ausgleicht, dass man im Rahmen der zweiten Reaktionsstufe die in der ersten Stufe aufgetretenen Verluste von A) und/oder C) in Stufe 2 zugibt und letztere gemeinsam mit B) Polytetrahydrofuran zur Umsetzung bringt.

Ein weiterer Gegenstand der vorliegenden Erfindung ist daher ein Verfahren zur Herstellung von Polycarbonatpolyolen wie beschrieben, wobei in der zweiten Stufe zusätzlich zu dem

B) mindestens einen Polytetrahydrofuran
zum Ausgleich der in der ersten Stufe teilweise entfernten Diole A) und/oder C)

A) mindestens ein a, $\omega$-Alkandiol mit 4 bis 8 C-Atomen und/oder

C) Diethylenglykol
zugegeben wird.

Weiterhin Gegenstand der Erfindung ist ein Verfahren zur Herstellung von Polycarbonatpolyolen wie beschrieben, bei dem

in der ersten Stufe die Komponenten A) und/oder C) überschüssig in einer Menge eingesetzt werden, die eine Abweichung von 2 bis 20 Hydroxylzahleinheiten gegenüber der eigentlich angestrebten Hydroxylzahl ergibt.

In einer Ausführungsform des erfinderischen Verfahrens handelt es sich bei dem Katalysator um einen basischen Katalysator. Der Katalysator kann nach Abschluss der zweiten Stufe mit einer Broenstedtsäure neutralisiert werden.

In einer weiteren Ausführungsform des erfinderischen Verfahrens erfolgt die Umsetzung beider Stufen bei Temperaturen im Bereich von 100 °C bis 225 °C, bevorzugt 160 °C bis 210 °C.

Katalysatoren für das erfindungsgemäße Verfahren sind beispielsweise basische Katalysatoren wie Magnesiumhydroxidcarbonat Pentahydrat aber auch Oxide, Hydroxide, Alkoholate, Carboxylate und Phenolate der Alkali- und Erdalkalimetalle.

Beispiele für Broenstedt-Säuren sind, z.B. Salzsäure, Organomineralsäuren, z.B. Dibutylphosphat, weiterhin Adipinsäure, Äpfelsäure, Bernsteinsäure, Traubensäure oder Zitronensäure.

Die erfindungsgemäßen Polycarbonatpolyole können anschließend vorzugsweise über eine Prepolymerstufe zu Polyurethan-Werkstoffen (PUR) weiterverarbeitet werden, indem die erfindungsgemäßen Polycarbonatpolyole, ggf. unter Mitverwendung von kurzkettigen organischen Verbindungen mit Hydroxyl- und/oder Aminoendgruppen und/oder Wasser, mit Polyisocyanaten, vorzugsweise Diisocyanaten umgesetzt werden.

Ein weiterer Gegenstand der Erfindung sind demnach NCO-Prepolymere basierend auf bzw. enthaltend die erfindungsgemäßen Polycarbonatpolyole als Aufbaueinheit. Insbesondere erfindungsgemäß sind NCO-Prepolymere mit einem NCO-Gehalt von 3 bis 15 Gew.-% erhältlich durch Umsetzung von erfindungsgemäßen Polycarbonatpolyolen und mindestens einem Polyisocyanat aus der Gruppe bestehend aus 1,5-Naphthalindiisocyanat, 2,4'-Diphenylmethandiisocyanat (2,4'-MDI), 4,4'-Diphenylmethandiisocyanat (4,4'-MDI), oder deren Mischungen, Gemische aus 2,4'- und 4,4'-MDI sowie carbodiimid-/uretonimin-modifizierten MDI-Derivaten und höherkernigen Homologen der Diphenylmethan-Reihe, Diisocyanatotoluole, Hexamethylendiisocyanat, Isophorondiisocyanat oder deren Mischungen im molaren Überschuss, bevorzugt in einem Verhältnis von NCO- zu OH-Gruppen von1,8:1 bis 10:1, bevorzugt 2,0:1 bis 5:1, besonders bevorzugt 2,1:1 bis 3:1.

Ein weiterer Gegenstand der Erfindung sind Polyurethanelastomere bzw. Polyurethanharnstoffelastomere basierend auf bzw. enthaltend die erfindungsgemäßen NCO-Prepolymere.

Insbesondere erfindungsgemäß sind Polyurethanelastomere bzw. Polyurethanharnstoffelastomere erhältlich durch Umsetzung von erfindungsgemäßen NCO-Prepolymeren mit (i) mindestens einem aliphatischen Diol mit primären Hydroxylgruppen und zahlenmittleren Molekulargewicht von 62 bis 202 und in Mengen von 0-10 Gew.-%, bezogen auf das mindestens eine aliphatische Diol, Verbindungen aus der Gruppe bestehend aus kurzkettigen Polyolen mit Funktionalitäten >2 bis 4 und höhermolekularen Polyolen mit einer Funktionalität von 2 und erfindungsgemäßen Polycarbonatpolyolen oder (ii) mindestens einem aromatischen diaminischen Kettenverlängerern aus der Gruppe bestehend aus 4,4'-Methylen-bis-(2-chloroalinin) (MBOCA), 3,3', 5,5'-Tetraisopropyl-4,4' -diaminodiphenylmethan, 3,5-Dimethyl-3',5' -diisopropyl-4,4' -diaminophenylmethan, 3,5-Diethyl-2,4-toluylendiamin, 3,5-Diethyl-2,6-toluylendiamin (DETDA), 4,4'-Methylen-bis-(3-chloro-2,6-diethylanilin), 3,5-Dimethylthio-2,4-toluylendiamin, 3,5-Dimethylthio-2,6-toluylendiamin, 3,5-Diamino-4-chlorobenzoesäure-isobutylester oder deren Mischungen in Anwesenheit von gegebenenfalls Wasser und gegebenenfalls weiterer Hilfs- und Zusatzstoffen.

Bevorzugt werden als aliphatische Diole Butandiol, Hexandiol, 1,4-Cyclohexandiol, 2,2'-Thiodiethanol oder Mischungen davon eingesetzt.

Bei Einsatz von Wasser als Kettenverlängerer und/oder als Treibmittel weisen die Polyurethanelastomere bevorzugt Dichten von 0,3 bis 0,95 g/cm$^3$ auf, bevorzugt 0,5 bis 0,9.

Die Polyurethan- und die Polyurethanharnstoffelastomere werden bevorzugt nach dem Gießverfahren hergestellt, wobei man im Wesentlichen zwei Prozesse unterscheidet: Zum einen das NCO-Prepolymerverfahren, bei dem langkettiges Polyol und stöchiometrisch überschüssiges Polyisocyanat zu einem NCO-Gruppen aufweisenden Prepolymer umgesetzt werden und dann mit einer kurzkettigen organischen Verbindung mit Hydroxyl- oder Aminoendgruppen und/oder Wasser kettenverlängert wird. Zum anderen können Polyurethangießelastomere auch nach dem one-shot-Verfahren hergestellt werden, bei dem langkettiges Polyol und kurzkettige organische Verbindungen mit Hydroxyl- oder Aminoendgruppen und/oder Wasser gemischt werden und dann mit Polyisocyanat umgesetzt werden.

Aus den erfindungsgemäßen Polycarbonatpolyolen können neben Polyurethangießelastomeren auch thermoplastisch verarbeitbare Polyurethanelastomere nach den dem Fachmann bekannten Verfahren hergestellt werden.

Zusätzlich zu den erfindungsgemäß eingesetzten Komponenten können bei der Herstellung der Polyurethanoder Polyurethanharnstoffelastomere die üblichen Katalysatoren und Hilfsmittel verwendet werden.

Beispiele für Katalysatoren sind Trialkylamine, Diazabicyclooctan, Zinn-dioctoat, Dibutylzinndilaurat, N-Alkylmorpholin, Blei-, Zink-, Kalzium-, Magnesiumoctoat, die entsprechenden Naphthenate, p-Nitrophenolat.

Beispiele für Stabilisatoren sind Broenstedt- und Lewis-Säuren, z.B. Salzsäure, Benzoylchlorid, Organomineralsäuren, z.B. Dibutylphosphat, weiterhin Adipinsäure, Äpfelsäure, Bernsteinsäure, Traubensäure oder Zitronensäure.

Beispiele für UV-Schutzmittel und Hydrolyseschutzmittel sind beispielsweise 2,6-Dibutyl-4-methylphenol und Carbodiimide.

Einbaufähige Farbstoffe, die ebenfalls eingesetzt werden können, sind solche, die über Zerewitinoff aktive Wasserstoffatome verfügen, die mit NCO-Gruppen abreagieren können.

Unter Zerewitinoff aktiven Wasserstoffatomen werden solche verstanden, die an Stickstoff, Sauerstoff oder Schwefel gebunden, aktiv sind, d. h. sich vergleichsweise leicht als Proton abspalten lassen, und eine gewisse Acidität aufweisen. Zerewitinoff aktive Wasserstoffatome von Carboxy-, Hydroxy-, Amino- und Imino- sowie Thiol-Gruppen lassen sich nach einem von T. Zerewitinoff gefundenen Verfahren (Zerewitinoff-Reaktion, Zerewitinoff-Bestimmung) zur Konstitutionsermittlung organischer Verbindungen ermitteln. Umsetzung der aciden Verbindung mit Methylmagnesiumiodid in Butylethern oder anderen Ethern (Zerewitinoffs Reagenz, Gleichung z. B. ROH + CH$_3$MgI → ROMgI + CH$_4$) ermöglicht

die Bestimmung der Anzahl aktiver Wasserstoff-Atome, durch gasvolumetrische Messung des entstehenden Methans (ein Äquivalent pro aktivem Wasserstoff-Atom). Auch der aktive Wasserstoff von C-H-aciden Verbindungen (Carbonyl-Verbindungen, Nitrile, Alkine, Nitro-Verbindungen, Sulfone) lässt sich in Einzelfällen so quantitativ erfassen.

Weitere Hilfs- und Zusatzstoffe umfassen Emulgatoren, Schaumstabilisatoren, Zellregler und Füllstoffe. Eine Übersicht ist in G. Oertel, Polyurethane Handbook, 2nd edition, Carl Hanser Verlag, München, 1994, Kap. 3.4. enthalten.

Die Verwendung der erfindungsgemäßen Polyurethanelastomere liegt im Bereich technischer Bauteile, ist demzufolge äußerst vielfältig und umfasst beispielsweise Walzenbeschichtungen, Schuhpressmäntel in der Papierindustrie, Molche, Molchscheiben, Dichtungen, Pipe-Coatings in der Öl-und Gasindustrie, Versteifungselemente für Rohre und Kabel in der Offshore-Industrie, Förderbänder und Siebe im Bergbaubereich, sowie Rakel, Räder, Rollen, oder Elektrovergussmasse.

Ebenfalls Gegenstand der Erfindung sind demnach technische Bauteile, Walzenbeschichtungen, Schuhpressmäntel, Elektrovergussteile, Molche, Molchscheiben, Dichtungen, Pipe-Coatings, Versteifungselemente für Rohre oder Kabel Rakel, Räder, Rollen, Förderbänder oder Siebe enthaltend die erfindungsgemäßen Polyurethan- und Polyurethanharnstoffelastomeren.

Die Erfindung soll anhand der nachfolgenden Beispiele näher erläutert werden.

**Experimenteller Teil**

**Rohstoffe**

| | |
|---|---|
| Diphenylcarbonat | Lanxess AG |
| Hexandiol | BASF SE |
| Diethylenglykol | Ineos GmbH |
| Polytetrahydrofuran 650 | OHZ 174,7 mg KOH/g von Sigma-Aldrich |
| Polytetrahydrofuran 1000 | OHZ 113,7 mg KOH/g der Fa. Invista, |
| Polytetrahydrofuran 2000 | OHZ 55,8 mg KOH/g der BASF SE |
| Dibutylphosphat | Fluka |
| TEG T | etraethylenglykol der Fa. Sigma Aldrich |
| Magnesiumhydroxidcarbonat Pentahydrat | Merck |
| Desmodur® 0118 T | Monomeres Diphenylmethan-4,4'-diisocyanat (MDI ) mit einem Molekulargewicht von 250 g/mol und einem NCO-Gehalt von 33,6 Gew.-% NCO der Fa. Covestro Deutschland AG |
| Baytec C2208 | Polycarbonatpolyol ohne Ethergruppen der Fa. Covestro Deutschland AG mit einer Hydroxylzahl von ca. 56 mg KOH/g, einer Funktionalität von 2 und einer Viskosität von 1600 mPas (75°C). |
| Butandiol: | 1,4-Butandiol der Fa. Sigma Aldrich |
| Baytec XL B: | Standardvernetzer der Fa. Covestro Deutschland AG für die Herstellung von Heißgieß- und Kaltgieß-Polyurethanelastomeren mit einer Hydroxylzahl von ca. 1245 mg KOH/g und einem Schmelzpunkt von ca. 19,5 °C. |
| Baytec XL TR: | Vernetzer der Fa. Covestro Deutschland AG für die Herstellung von Heiß- und Kaltgieß-Polyurethanelastomeren, der Raumtemperatur in farblosen Schuppen vorliegt, welche oberhalb von 60°C zu einer ebenfalls farblosen Flüssigkeit schmelzen. Die Hydroxylzahl beträgt OH-Zahl ca. 1254 mg KOH/g. |
| Baytec VP.PU 0385: | Ethergruppen aufweisendes Polycarbonatpolyol der Fa. Covestro Deutschland AG mit einer Hydroxylzahl von 56 mg KOH/g und einer Funktionalität von 2. |

**Analysenmethoden**

| | |
|---|---|
| Hydroxylzahl: | Die Bestimmung der OH-Zahl erfolgte gemäß der Vorschrift der DIN 53240-1 (Verfahren ohne Katalysator, Fassung v. Juni 2013). |
| Aminzahl: | Gesamtbasenzahl gemäß DIN 51639-1 in der Fassung von Nov. 2014 |

(fortgesetzt)

| | |
|---|---|
| Säurezahlen | wurden gemäß DIN EN ISO 2114 (Juni 2002) bestimmt. |
| Viskosität: | Dynamische Viskosität: Rheometer MCR 51 der Firma Anton Paar entsprechend DIN 53019-1 (Fassung v. September 2008) mit einem Messkegel CP 50-1, Durchmesser 50 mm, Winkel 1° bei Scherraten von 25, 100, 200 und 500 s$^{-1}$. Die erfindungsgemäßen und nicht erfindungsgemäßen Polyole zeigen von der Scherrate unabhängige Viskositätswerte . |

Zur photometrischen Bestimmung von aromatischen Endgruppen (Phenoxy- und Phenylcarbonat) sowie freiem Phenol in Polycarbonatpolyolen wurde ein Lambda 25 UV/Vis-Spektrometer der Fa. Perkin Elmer verwendet.

| | |
|---|---|
| DSC max: | DIN EN ISO 11357-1, Fassung v. März 2010. In °C angegebenes Peakmaximum (Endotherm) einer Aufheizkurve von - 40 °C bis +100 °C, Heizrate 10 °C/min, bestimmt mit Hilfe eines DSC-Gerätes Q20 der Fa. TA Waters, wobei die Probe vor der Messung für mehr als 4 Wochen bei Raumtemperatur gelagert wurde. |
| Shore Härte: | DIN ISO 7619-1; Fassung v. Feb. 2012 |
| Spannung 100%. Spannung 300%. Reißspannung und Reißdehnung: | DIN 53504 (Fassung v. 1.10.2009) |
| Weiterreißfestigkeit: | ISO 34-1 (Fassung v. 1.9.2016). Es wurden winkelförmige Probenkörper verwendet |
| Stoßelastizität: | DIN 53512 (Fassung v. 1.4.2000) |
| Abrieb | DIN ISO 4649 (Fassung v. März 2014) |
| Dichte | DIN EN ISO 1183-1 (Fassung v. April 2014) |
| DVR -Druckverformungsrest, | 22 Std. 70 °C gemäß ISO 815-1 (Fassung v. 1.9.2016) |
| Glasübergangstemperatur, Dynamisch mechanische Analyse, DMA: | Die Glasübergangstemperatur wurde mittels Dynamisch Mechanischer Analyse (DMA) gemäß der Vorschrift des Geräteherstellers bestimmt, wobei ein DMA 2980-Gerät der Firma TA Instruments verwendet wurde und wobei die Messung im sogenannten Single Cantilever-Modus erfolgte (Datum/Fassung nicht aus der Betriebsanleitung ersichtlich). Als |
| | Glasübergangstemperatur wird die Temperatur angegeben, bei der die tan δ-Kurve ein Maximum aufweist. Hierbei wurde die Probe bei -80 °C äquilibriert und anschließend bei einer Amplitude von 100 μm, einer Frequenz von 1 Hz mit einer Heizrate von 3 °C/min bis maximal 230 °C erwärmt. Kennzahl: Bezeichnet das mit 100 multiplizierte molare Verhältnis von NCO- zu NCO-reaktiven Gruppen einer Rezeptur |
| Gießzeit: | Zeit, die vom Ende des Einrührens des Vernetzers bis zu einem merklichen Viskositätsanstieg der Reaktionsmasse vergeht. Wird die Gießzeit überschritten, so kann die reagierende Schmelze nicht mehr vergossen werden, ohne dass es zu Qualitätseinbußen, beispielsweise Lufteinschlüssen, schlechte visuelle Oberflächenqualität, bis hin zu mangelhaften physikalischen Eigenschaften im fertigen Bauteil kommt. |
| Abhebezeit: | Zeit, die eine auf eine heiße Oberfläche (110 °C) gegossene Reaktionsmasse benötigt, um formstabil von dieser Oberfläche abgehoben werden zu können. |
| Tischtemperatur: | Temperatur des Gießtisches, 110 °C |
| Formtemperatur: | Temperatur der Form, 110 °C. |
| Entformungszeit: | Die Zeit, die benötigt wird, um einen bei 110 °C Formtemperatur gegossenen Prüfkörper dimensionsstabil und klebfrei entformen zu können. |

Im Falle NDI basierter Rezepturen werden die Prüfkörper unmittelbar nach Entformung für 24 Std. bei 110 °C in einem Umlufttrockenschrank thermisch nachbehandelt. Vor der Bestimmung der mechanischen Eigenschaften werden die Prüfkörper für 4 Wochen bei Raumtemperatur und ca. 50% rel. Luftfeuchtigkeit gelagert.

**Ausführungsbeispiele**

**1.) Synthese der Polycarbonatpolyole, zweistufiges Verfahren (erfindungsgemäß)**

Die erfindungsgemäßen Bsple. A-1 und A5 und die Vergleichsbeispiele A2 bis A-4 wurden nach folgendem Verfahren hergestellt:

Beispiel A-1: Polycarbonatpolyol aus Polytetrahydrofuran, Diethylenglykol und Hexandiol

In einer Destillationsapparatur bestehend aus einem 10 Liter-Vierhalskolben, Heizpilz, Thermofühler, Schliffolive zur Einleitung von Stickstoff, Rührer, Kolonne, beheizte (45 °C) Destillationsbrücke, absteigender, beheizter (45 °C) Claisenkühler mit beheiztem (45 °C) Hahn, Zweihalskolben als Vorlage, Thermometer für Kopftemperatur, Membranpumpe, und Ölpumpe wurden 4386,9 g (20,38 Mol) Diphenylcarbonat, 2054 g (17,35 Mol) Hexandiol, 474 g (4,47 Mol) Diethylenglykol und 122 mg Magnesiumhydroxidcarbonat Pentahydrat vorgelegt und langsam unter Rühren auf 180°C unter $N_2$-Überlagerung erhitzt. Man rührte bei 180 °C für 2 Stunden bei Normaldruck und kühlt dann auf 110 °C ab und legte Vakuum an. Bei Erreichen von 15 mbar wurde Phenol abdestilliert, wobei die Kopftemperatur maximal 80 °C betrug.
Bei Verlangsamung der Phenoldestillation wurde die Sumpftemperatur in kleinen Schritten auf zuletzt 200 °C angehoben. Unter diesen Reaktionsbedingungen wurde die Umsetzung für eine Stunde vervollständigt.
Im Anschluss wurde der Druck auf ca. 0,5 bis 1 mbar reduziert um Reste von Phenol zu entfernen. Die Auswaage Phenol betrug 3848 g (theoret. 3850 g). Nach Abkühlen auf ca. 80 °C wurde eine Probe zur Bestimmung der OH-Zahl und der Endgruppen entnommen:

OH-Zahl: 46,3 mg KOH/g
Endgruppen: Phenylcarbonatendgruppen 0,07 Gew.-%, Phenol und Phenoxyendgruppen: nicht nachweisbar

Die Masse des so erhaltenen Zwischenproduktes wurde zu 3007 g bestimmt und mit 506 g Polytetrahydrofuran 1000 (OH-Zahl 113,7 mg KOH/g) versetzt. Man erhitzt unter $N_2$-Überlagerung unter Rühren für 6 Stunden auf 200 °C. Nach Abkühlen auf ca. 80 °C wurde eine Probe zur Bestimmung der OH-Zahl und der Viskosität entnommen. Anschließend wurde durch Einrühren von 720 mg Dibutylphosphat bei 80°C neutralisiert.

OH-Zahl: 57,8 mg KOH/g
Viskosität: 2200 mPas (75 °C)

**2.) Synthese der Polycarbonatpolyole, einstufiges Verfahren (nicht erfindungsgemäß)**

Die nicht erfindungsgemäßen Bsple. A-6 und A-7 wurden nach folgendem Verfahren hergestellt:

Beispiel A-6: Polycarbonatpolyol aus Polytetrahydrofuran 1000, Diethylenglykol und Hexandiol

In einer Destillationsapparatur bestehend aus einem 10 Liter-Vierhalskolben, Heizpilz, Thermofühler, Schliffolive zur Einleitung von Stickstoff, Rührer, Kolonne, beheizte (45 °C) Destillationsbrücke, absteigender, beheizter (45 °C) Claisenkühler mit beheiztem (45 °C) Hahn, Zweihalskolben als Vorlage, Thermometer für Kopftemperatur, Membranpumpe, und Ölpumpe wurden 4214 g (19,67 Mol) Diphenylcarbonat, 2436,6 g (20,76 Mol) Hexandiol, 1044,3 g (1,05 Mol) Polytetrahydrofuran 1000 und 160 mg Magnesiumhydroxidcarbonat Pentahydrat vorgelegt und langsam unter Rühren auf 180°C unter $N_2$-Überlagerung erhitzt. Man rührte bei 180 °C für 2 Stunden bei Normaldruck und kühlt dann auf 110 °C ab und legte Vakuum an. Da beim Erreichen von 15 mbar kein Phenol abdestillierte (im Unterschied zu den erfindungsgemäßen Beispielen) wurde die Temperatur schrittweise erhöht, wobei die Phenoldestillation bei 145 °C Sumpftemperatur in geringem Umfang einsetzte, wobei die Kopftemperatur jedoch rasch auf 110 °C anstieg und Hexandiol an Stelle von Phenol abdestilliert wurde (im Unterschied zu den erfindungsgemäßen Beispielen).
Mehrfaches Absenken der Sumpftemperatur auf 140 °C beendete zwar die unerwünschte Destillation des Hexandiols, führte aber nicht zur Nachbildung weiteren Phenols, d.h. bei Steigern der Sumpftemperatur stieg die Kopftemperatur wiederholt auf 110 °C.
Der Ansatz wurde verworfen.

**3.) Synthese der Polycarbonatpolyole, einstufiges Verfahren (nicht erfindungsgemäß)**

Die nicht erfindungsgemäßen Bsple. A-8 und A-9 wurden nach folgendem Verfahren hergestellt:

Beispiel A-8: Polycarbonatpolyol aus Diethylenglykol und Hexandiol

In einer Destillationsapparatur bestehend aus einem 6 Liter-Vierhalskolben, Heizpilz, Thermofühler, Schliffolive zur Einleitung von Stickstoff, Rührer, Kolonne, beheizte (45°C) Destillationsbrücke, absteigender, beheizter (45°C) Claisenkühler mit beheiztem (45°C) Hahn, Zweihalskolben als Vorlage, Thermometer für Kopftemperatur, Membranpumpe, und Ölpumpe wurden 2865,1 (13,38 Mol) Diphenylcarbonat, 1181 g (10,06 Mol) Hexandiol, 468,6 g (4,42 Mol) Diethylenglykol und 80 mg Magnesiumhydroxidcarbonat Pentahydrat vorgelegt und langsam unter Rühren auf 180°C unter $N_2$-Überlagerung erhitzt. Man rührte bei 180°C für 2 Stunden bei Normaldruck und kühlte dann auf 110°C ab und legte Vakuum an.

Bei Erreichen von 15 mbar wurde Phenol abdestilliert, wobei die Kopftemperatur maximal 80°C betrug.

Bei Verlangsamung der Phenoldestillation wurde die Sumpftemperatur in kleinen Schritten auf zuletzt 200°C angehoben. Unter diesen Reaktionsbedingungen wurde die Umsetzung für eine Stunde vervollständigt.

Im Anschluss wurde der Druck auf ca. 0,1 bis 0,5 mbar reduziert um Reste von Phenol zu entfernen. Die Auswaage Phenol betrug 2517 g (theoret. 2515 g). Nach Abkühlen auf ca. 80°C wurde eine Probe zur Bestimmung der OH-Zahl und der Endgruppen entnommen Anschließend wurde durch Einrühren von 470 mg Dibutylphosphat bei 80°C neutralisiert.

OH-Zahl: 48,4 mg KOH/g
Endgruppen: Phenylcarbonatendgruppen 0,02 Gew.-%, Phenol 0,01 Gew.-% und Phenoxyendgruppen 0,04 Gew.-%.
Viskosität: 4480 mPas (75 °C)

**Tabelle 1:** Rezepturen und analytische Daten von erfindungs- und nicht erfindungsgemäßen Polycarbonatpolyolen

| Beispiel | | A-1, erf. gem. | A-2, Vgl.. | A-3, Vgl.. | A-4, Vgl.. | A-5, erf. gem. | A-6, Vgl. | A-7, Vgl. | A-8, Vgl. | A-9, Vgl. |
|---|---|---|---|---|---|---|---|---|---|---|
| **Formulierung:** | | | | | | | | | | |
| Diphenylcarbonat | [g] | 4386,9 | 4362,7 | 4150,2 | 3031,0 | 4307,0 | 4214,2 | 4319,0 | 2865,1 | 2533,7 |
| Hexandiol-1,6 | [g] | 2054,0 | 2562,7 | 2479,6 | 1814,0 | 1910,3 | 2436,6 | 2427,6 | 1181,0 | 1255,7 |
| Polytetrahydrofuran 650 | [g] | - | - | - | - | - | - | 1040,4 | - | - |
| Polytetrahydrofuran 1000 | [g] | 506 | 540 | - | - | 930,0 | 1044,3 | - | - | - |
| Polytetrahydrofuran 2000 | [g] | - | - | 900 | 1814,0 | - | - | - | - | - |
| Diethylenglykol | [g] | 474 | - | - | - | 536,5 | - | - | 468,6 | - |
| Tetraethylenglykol | [g] | - | - | - | - | - | - | - | - | 434,4 |
| Abdest. Phenol, exp | [g] | 3848 | 3826 | 3637 | 2660 | 3777 | - | - | 2517 | 2226 |
| Abdest. Phenol, theoret | [g] | 3850 | 3829 | 3642 | 2660 | 3780 | 3699 | 3791 | 2515 | 2224 |
| Magnesiumhydroxidcarbonat | [mg] | 148 | 138 | 160 | 160 | 160 | 160 | 320 | 80 | 80 |
| Dibutylphosphat | [mg] | 866 | 807 | 937 | 933 | 933 | - | - | 468 | 468 |
| **Berechnete Eigenschaften:** | | | | | | | | | | |
| Carbonatgr. pro kg Produkt | [mol/kg] | 5,57 | 5,53 | 4,87 | 3,56 | 5,03 | - | - | 6,69 | 5,92 |
| Ethergruppen pro kg Produkt | [mol/kg] | 3,39 | 2,15 | 3,58 | 6,27 | 4,56 | - | - | 2,21 | 3,36 |
| mol. Verhältnis Carbonat-/Ethergruppen | [mol/kg/mol/kg]] | 1,64 | 2,57 | 1,36 | 0,57 | 1,10 | - | - | 3,03 | 1,76 |
| **Eigenschaften:** | | | | | | | | | | |
| OH-Zahl Vorstufe (exp.) | [mgKOH/g] | 46,3 | 34,8 | 44,7 | 55,2 | 37,6 | - | - | - | - |
| OH-Zahl Endprodukt (exp.) | [mgKOH/g] | 57,8 | 54,8 | 55,8 | 50,0 | 52,0 | - | - | 48,4 | 52,9 |
| Viskosität bei 75°C | [mPa*s] | 2200 | 2130 | 1680 | 2600 | 2540 | - | - | 4480 | 2210 |
| DSC max. | [°C] | 33 | 47 | 47 | 43 | 15 | - | - | amorph | 33 |
| Phenoxy-Endgruppen | [Gew.-%] | 0 | 0 | 0 | 0 | 0 | - | - | 0,044 | 0,033 |

(fortgesetzt)

| Eigenschaften: | | | | | | | | | | |
|---|---|---|---|---|---|---|---|---|---|---|
| Phenol | [Gew.-%] | 0 | 0 | 0 | 0,02 | 0 | - | - | 0,011 | 0,085 |
| Phenylcarbonat-Endgruppen | [Gew.-%] | 0,07 | 0,21 | 0,22 | 0 | 0,09 | - | - | 0,017 | 0 |
| Fahrweise | | 2-stufig | 2-stufig | 2-stufig | 2-stufig | 2-stufig | 1-stufig Abbruch | 1-stufig Abbruch | 1-stufig | 1-stufig |

**4.) Synthese von NCO-Prepolymeren**

Die Synthese der NCO-Prepolymeren erfolgte durch Umsetzung der Polycarbonatpolyole Bsple. A-1 bis A-5 und A-8 bis A-10 aus Tabelle 1 mit Desmodur 0118T:

Beispiel B-1 (erfindungsgemäß):

In einem 6 1-Dreihalskolben, versehen mit einem Heizpilz, Rührwerk und Innenthermometer wurden 1850 g (7,4 Mol) Desmodur 0118T unter Stickstoffüberschleierung bei 50°C unter Rühren vorgelegt. Dann wurden 3001 g eines auf 80°C vorgewärmten Polycarbonatpolyols aus Beispiel A-1 im Verlauf von ca. 10 Minuten unter Rühren zugegeben. Anschließend wurde bei 80°C unter Stickstoff weitergerührt. Nach 2 Stunden war die Reaktion beendet. Der NCO-Gehalt betrug 10,04 Gew.-% und die Viskosität 1760 mPas (bei 75°C).

**Tabelle 2:** Rezepturen und analytische Daten der MDI-basierten NCO-Prepolymere; die Einwaagen ergeben sich aus den Hydroxylzahlen der Polyole und dem NCO-Gehalt des Desmodur 0118T.

| Beispiel: | Prepolymer | B-1 erf. gem. | B-2 Vgl. | B-3 Vgl. | B-4 Vgl.. | B-5 erf. gem. | B-8 (V) | B-9 (V) |
|---|---|---|---|---|---|---|---|---|
| Polyol aus Bspl. | Einwaage | | | | | | | |
| A-1, erf. gem. | [g] | X | - | - | - | - | - | - |
| A-2, Vgl. | [g] | - | X | - | - | - | - | - |
| A-3, Vgl. | [g] | - | - | X | - | - | - | - |
| A-4, Vgl. | [g] | - | - | - | X | - | - | - |
| A-5, erf. gem | [g] | - | - | - | - | X | - | - |
| A-8, Vgl | [g] | - | - | - | - | - | X | - |
| A-9, Vgl | [g] | - | - | - | - | - | - | X |
| Baytec C2208 | [g] | - | - | - | - | - | - | - |
| | | | | | | | | |
| Desmodur 118T | [g] | X | X | X | X | X | X | X |
| | | | | | | | | |
| NCO-Gehalt | [Gew.-% NCO] | 10,04 | 9,9 | 10 | 10,1 | 9,9 | 10,0 | 9,98 |
| Viskosität, 75 °C | [mPas] | 1760 | 2010 | 1890 | 2230 | 2020 | 4480 | 2210 |

**5.) Herstellung von Gießelastomeren auf Basis von 4,4'-Diphenylmethandiisocyanat (MDI)**

Beispiel C-1, erfindungsgemäß:

100 Teile. eines auf 70°C vorgewärmten und entgasten Prepolymeren (aus Beispiel B-1) wurden mit 10,15 Teilen. 1,4-Butandiol 30 Sekunden verrührt. Die reagierende Schmelze wurde in 115°C heiße Metallformen gegossen und für 24 Std. bei 110°C nachgetempert. Nach 21 Tagen Lagerung bei Raumtemperatur wurden die mechanischen Daten bestimmt (Tabelle 3). Alle Mengenangaben sind Gewichtsangaben.

Das erfindungsgemäße Beispiel C-5 und die Vergleichsbeispiele C2 bis C4 und C8 bis C-9(V) wurden wie unter obigem Beispiel C-1 beschrieben hergestellt.

**Tabelle 3:** Herstellung und Eigenschaften von Polyurethan- und Polyurethanharnstoffelastomeren C-1 bis C-9 (V) durch Umsetzung der MDI Prepolymere (B-1 bis B-10 (V)) mit Butandiol; die Gewichtsteile MDI-Prepolymer und Butandiol ergeben sich aus dem NCO-Gehalt des Prepolymeren und der angebenen Kennzahl.

| | | | C-1 erf. gem. | C-2 Vgl | C-3 Vgl. | C-4 Vgl. | C-5 erf. gem. | C-8 (V) | C-9 (V) |
|---|---|---|---|---|---|---|---|---|---|
| **Rezeptur:** | | | B-1 erf. gem. | B-2 Vgl. | B-3 Vgl. | B-4 Vgl. | B-5 erf. gem. | B-8 (V) | B-9 (V) |
| | Prepolymer | | | | | | | | |
| | MDI-Prepolymer | [Tle.] | X | X | X | X | X | X | X |
| | NCO-Gehalt Prep | [%] | 10,04 | 9,9 | 10 | 10,1 | 9,9 | 10,0 | 9,98 |
| | Viskosität (70°C) | [mPas] | 2750 | 3085 | 2965 | 2970 | 2965 | 4330 | 2810 |
| | Butandiol | [Tle.] | X | X | X | X | X | X | X |
| | Kennzahl | | 103 | 103 | 103 | 103 | 103 | 103 | 103 |
| **Verarbeitung:** | Prepolymertemperatur | [°C] | 70 | 70 | 70 | 70 | 70 | 70 | 70 |
| | Gießzeit | [s] | 250 | 260 | 250 | 220 | 250 | 180 | 180 |
| | Entformungszeit | [min] | - | - | - | - | - | 60 | 60 |
| **Mechanische Eigenschaften:** | | | | | | | | | |
| | Shore A | | 97A | 95,5A | 96A | 97A | 95,5A | 98A | 98A |
| | Shore D | | 53D | 47D | 48D | 53D | 47D | 55D | 58D |
| | Spannung 100% | [MPa] | 15,7 | 15,7 | 14,5 | 13,3 | 13,2 | 18,3 | 16,2 |
| | Spannung 300% | [MPa] | 32,4 | 41,6 | 33,9 | 26 | 32 | 30,3 | 34 |
| | Reißspannung | [MPa] | 52 | 57 | 47 | 54 | 52 | 49 | 44 |
| | Reißdehnung | [%] | 410 | 382 | 391 | 474 | 417 | 414 | 400 |
| | Weiterreißfestigkeit, ohne Einkerbung | [kN/m] | 159 | 151 | 149 | 152 | 152 | 176 | 163 |
| | Weiterreißfestigkeit, mit Einkerbung | [kN/m] | 112 | 82 | 82 | 101 | 69 | 124 | 104 |
| | Stoßelastizität | [%] | 42 | 42 | 42 | 48 | 43 | 41 | 45 |
| | Abrieb | [mm³] | 65 | 65 | 55 | 50 | 45 | 66 | 89 |
| | Dichte | [g/mm³] | 1,19 | 1,18 | 1,17 | 1,16 | 1,19 | 1,16 | 1,16 |
| | DVR 22 Std. 70 °C | [%] | 52 | 43 | 46 | 47 | 46 | 36 | 34 |
| | Glasübergangstemperatur, DMA | [ °C] | -9,0 | -13,9 | -13,4 | nicht bestimmt | -12,1 | 5,8 | -2,7 |

Die Tabelle 3 zeigt, dass die erfindungsgemäßen Gießelastomere C-1 und C-5 hinsichtlich des Zug-Dehnungsverhaltens das gegebene Werteniveau veranschaulicht durch die nicht erfindungsgemäßen Beispiele C-8(V) bis C-10(V) gut erreichen. Gleiches gilt auch für die Weiterreißfestigkeiten, das Abriebverhalten, sowie mit kleinen Abstrichen auch für den Druckverformungsreste (DVR). Dabei weisen die erfindungsgemäßen Gießelastomere allerdings niedrigere Glasübergangstemperaturen auf und zeigen damit ein vorteilhaftes Tieftemperaturverhalten.

**Patentansprüche**

1. Polycarbonatpolyole mit einer OH-Zahl von 40 bis 80 mg KOH/g gemäß DIN 53240-1 vom Juni 2013 (ohne Katalysator) und einer mittleren Funktionalität von 1,9 bis 2,2 enthaltend das Umsetzungsprodukt aus

    A) mindestens einem $\alpha,\omega$-Alkandiol mit 4 bis 8 C-Atomen und
    B) mindestens einem Polytetrahydrofuran und
    C) Diethylenglykol
    mit mindestens einer
    D) Carbonylkomponente ausgewählt aus der Gruppe bestehend aus Diarylcarbonaten, Dialkylcarbonaten, zyklischen Alkylencarbonaten und $COCl_2$, besonders bevorzugt Diphenylcarbonat und/oder deren Mischungen.

2. Polycarbonatpolyole nach Anspruch 1, **dadurch gekennzeichnet, dass** das mindestens eine a, $\omega$-Alkandiol mit 4 bis 8 C-Atomen (A) ausgewählt ist aus der Gruppe bestehend aus 1,4-Butandiol, 2-Methylpropandiol-1,3, 1,5-Pentandiol, 3-Methylpentandiol-1,5, 1,6-Hexandiol und 1,8-Octandiol, bevorzugt 1,6-Hexandiol, und/oder deren Mischungen.

3. Polycarbonatpolyole nach Anspruch 1 oder 2, **dadurch gekennzeichnet**, und dass das mindestens eine Polytetrahydrofuran (B) zahlenmittlere Molekulargewichte im Bereich von 250 bis 2900 Da aufweist.

4. Polycarbonatpolyole nach Anspruch 1, 2 oder 3, **dadurch gekennzeichnet, dass** das molare Verhältnis von Carbonatgruppen zu Ethergruppen im Bereich von 0,2:1 bis 3,5:1 liegt.

5. Polycarbonatpolyole nach Anspruch 1,2 3 oder 4, **dadurch gekennzeichnet, dass** bei einer für mehr als 4 Wochen bei Raumtemperatur gelagerten Probe ein mittels DSC gemäß DIN EN ISO 11357-1 vom März 2010 bei einer Heizrate von 10 °C/min bestimmtes Maximum eines Schmelzendotherms im Bereich von 9 bis 59 °C liegt.

6. Verfahren zur Herstellung von Polycarbonatpolyolen nach mindestens einen der Ansprüche 1 bis 5, **dadurch gekennzeichnet, dass** ein zweistufiges Verfahren angewendet wird, bei dem in einer ersten Stufe in Gegenwart eines Katalysators ein Zwischenprodukt aus

    A) mindestens einem a, $\omega$-Alkandiol mit 4 bis 8 C-Atomen,
    C) Diethylenglykol und
    D) mindestens einer Carbonylkomponente aus der Gruppe bestehend aus Diarylcarbonaten, Dialkylcarbonaten, Alkylencarbonaten und $COCl_2$, besonders bevorzugt Diphenylcarbonat, und/oder deren Mischungen
    hergestellt wird und in einer zweiten Stufe mit
    B) mindestens einem Polytetrahydrofuran
    umgesetzt wird.

7. Verfahren gemäß Anspruch 6, **dadurch gekennzeichnet, dass** in der zweiten Stufe zusätzlich zu dem

    B) mindestens einen Polytetrahydrofuran
    zum Ausgleich der in der ersten Stufe teilweise entfernten Diole A) und/oder C)
    A) mindestens ein a, $\omega$-Alkandiol mit 4 bis 8 C-Atomen und/oder
    C) Diethylenglykol
    zugegeben wird.

8. Verfahren gemäß Anspruch 6, **dadurch gekennzeichnet, dass** in der ersten Stufe die Komponenten A) und/oder C) überschüssig in einer Menge eingesetzt werden, die eine Abweichung von 2 bis 20 Hydroxyzahleinheiten gegenüber der eigentlich angestrebten Hydroxyzahl ergibt.

**9.** NCO-Prepolymere basierend auf den Polycarbonatpolyolen gemäß einem der Ansprüche 1 bis 5.

**10.** NCO-Prepolymere gemäß Anspruch 9 mit einem NCO-Gehalt von 3 bis 15 Gew.-% erhältlich aus Umsetzung von Polycarbonatpolyolen gemäß einem der Ansprüche 1 bis 5 mit mindestens einem Polyisocyanat aus der Gruppe bestehend aus 1,5-Naphthalindiisocyanat, 2,4'-Diphenylmethandiisocyanat (2,4'-MDI), 4,4'-Diphenylmethandiisocyanat (4,4'-MDI), oder deren Mischungen, Gemische aus 2,4'- und 4,4'-MDI sowie carbodiimid-/uretonimin-modifizierten MDI-Derivaten und höherkernigen Homologen der Diphenylmethan-Reihe, Diisocyanattoluole, Hexamethylendiisocyanat, Isophorondiisocyanat oder deren Mischungen im molaren Überschuss.

**11.** Polyurethanelastomere und Polyurethanharnstoffelastomere basierend auf den NCO-Prepolymeren gemäß Ansprüchen 9 oder 10.

**12.** Polyurethanelastomere und Polyurethanharnstoffelastomere erhältlich aus Umsetzung von NCO-Prepolymeren gemäß Ansprüchen 9 oder 10 mit

(i) mindestens einem aliphatischen Diol mit primären Hydroxylgruppen und zahlenmittleren Molekulargewicht von 62 bis 202 und

in Mengen von 0-10 Gew.-% - bezogen auf das mindestens eine aliphatische Diol - Verbindungen aus der Gruppe bestehend aus kurzkettigen Polyolen mit Funktionalitäten >2 bis 4 und
höhermolekularen Polyolen mit einer Funktionalität von 2 und Polycarbonatpolyolen gemäß Anspruch 1
gegebenenfalls in Anwesenheit von Wasser und
gegebenenfalls weiteren Hilfs- und Zusatzstoffen und/oder

(ii) mindestens einem aromatischen diaminischen Kettenverlängerern aus der Gruppe bestehend aus 4,4'-Methylen-bis-(2-chloroanilin) (MBOCA), 3,3',5,5'-Tetraisopropyl-4,4'-diaminodiphenylmethan, 3,5 -Dimethyl-3',5 '-diisopropyl-4,4'-diaminophenylmethan, 3,5-Diethyl-2,4-toluylendiamin, 3,5-Diethyl-2,6-toluylendiamin (DETDA), 4,4'-Methylen-bis-(3-chloro-2,6-diethylanilin), 3,5-Dimethylthio-2,4-toluylendiamin, 3,5-Dimethylthio-2,6-toluylendiamin, 3,5-Diamino-4-chlorobenzoesäure-isobutylester oder deren Mischungen

gegebenenfalls in Anwesenheit von Wasser und
gegebenenfalls weiteren Hilfs- und Zusatzstoffen.

**13.** Verwendung der Polyurethan- und Polyurethanharnstoffelastomeren gemäß Ansprüchen 11 oder 12 zur Herstellung technischer Bauteile.

**14.** Verwendung der Polyurethan- und Polyurethanharnstoffelastomeren gemäß Ansprüchen 11 oder 12 als Walzenbeschichtungsmaterial oder Schuhpressmäntel, als Molche, Molchscheiben, Dichtungen, Pipe-Coatings, Versteifungselemente für Rohre oder Kabel, Förderbänder oder Siebe, Rakel, Räder, Rollen, oder Elektrovergussmasse.

**15.** Technische Bauteile, Walzenbeschichtungen, Schuhpressmäntel, Elektrovergussteile, Molche, Molchscheiben, Dichtungen, Pipe-Coatings, Versteifungselemente für Rohre oder Kabel Rakel, Räder, Rollen, Förderbänder oder Siebe enthaltend die Polyurethan- und Polyurethanharnstoffelastomeren gemäß Ansprüchen 11 oder 12.

**Claims**

**1.** Polycarbonate polyols having an OH number of 40 to 80 mg KOH/g according to DIN 53240-1 of June 2013 (without catalyst) and a mean functionality of 1.9 to 2.2, comprising the reaction product of

A) at least one $\alpha,\omega$-alkanediol having 4 to 8 carbon atoms and
B) at least one polytetrahydrofuran, and
C) diethylene glycol
with at least one
D) carbonyl component selected from the group consisting of diaryl carbonates, dialkyl carbonates, cyclic alkylene carbonates and $COCl_2$, more preferably diphenyl carbonate, and/or mixtures thereof.

**2.** Polycarbonate polyols according to Claim 1, **characterized in that** the at least one $\alpha, \omega$-alkanediol having 4 to 8 carbon atoms (A) is selected from the group consisting of 1,4-butanediol, 2-methylpropane-1,3-diol, 1,5-pentanediol, 3-methylpentane-1,5-diol, 1,6-hexanediol and 1,8-octanediol, preferably 1,6-hexanediol, and/or mixtures thereof.

3. Polycarbonate polyols according to Claim 1 or 2, **characterized in that** the at least one polytetrahydrofuran (B) has number-average molecular weights in the range from 250 to 2900 Da.

4. Polycarbonate polyols according to Claim 1, 2 or 3, **characterized in that** the molar ratio of carbonate groups to ether groups is in the range from 0.2:1 to 3.5:1.

5. Polycarbonate polyols according to Claim 1, 2, 3 or 4, **characterized in that** for a sample stored for more than four weeks at room temperature, a maximum in a melting endotherm determined by DSC according to DIN EN ISO 11357-1 of March 2010 at a heating rate of 10°C/min is in the range from 9 to 59°C.

6. Process for preparing polycarbonate polyols according to at least one of Claims 1 to 5, **characterized in that** a two-stage process is employed, wherein
in a first stage, in the presence of a catalyst, an intermediate is prepared from

A) at least one $\alpha$, $\omega$-alkanediol having 4 to 8 carbon atoms,
C) diethylene glycol, and
D) at least one carbonyl component from the group consisting of diaryl carbonates, dialkyl carbonates, alkylene carbonates and $COCl_2$, more preferably diphenyl carbonate, and/or mixtures thereof,

and in a second stage this intermediate is reacted with B) at least one polytetrahydrofuran.

7. Process according to Claim 6, **characterized in that** in the second stage, in addition to the

B) at least one polytetrahydrofuran,
for compensating the diols A) and/or C) partially removed in the first stage,
A) at least one $\alpha$, $\omega$-alkanediol having 4 to 8 carbon atoms and/or
C) diethylene glycol
are/is added.

8. Process according to Claim 6, **characterized in that** in the first stage, the components A) and/or C) are used in excess in an amount which produces a deviation of 2 to 20 hydroxyl number units relative to the actual target hydroxyl number.

9. NCO prepolymers based on the polycarbonate polyols according to any of Claims 1 to 5.

10. NCO prepolymers according to Claim 9, having an NCO content of 3 to 15 wt%, obtainable by reacting polycarbonate polyols according to any of Claims 1 to 5 with at least one polyisocyanate from the group consisting of 1,5-naphthalene diisocyanate, 2,4'-diphenylmethane diisocyanate (2,4'-MDI), 4,4'-diphenylmethane diisocyanate (4,4'-MDI), or mixtures thereof, mixtures of 2,4'- and 4,4'-MDI and also carbodiimide/uretonimine-modified MDI derivatives and higher polycyclic homologs of the diphenylmethane series, diisocyanatotoluenes, hexamethylene diisocyanate, isophorone diisocyanate or mixtures thereof in a molar excess.

11. Polyurethane elastomers and polyurethaneurea elastomers based on the NCO prepolymers according to Claim 9 or 10.

12. Polyurethane elastomers and polyurethaneurea elastomers obtainable by reacting NCO prepolymers according to Claim 9 or 10 with

(i) at least one aliphatic diol having primary hydroxyl groups and a number-average molecular weight of 62 to 202 and

in amounts of 0-10 wt%, based on the at least one aliphatic diol, compounds from the group consisting of short-chain polyols having functionalities >2 to 4 and polyols of higher molecular weight, having a functionality of 2, and polycarbonate polyols according to Claim 1,
optionally in the presence of water, and

optionally further auxiliaries and adjuvants, and/or

(ii) at least one aromatic diaminic chain extender from the group consisting of 4,4'-methylenebis(2-chloroaniline) (MBOCA), 3,3',5,5'-tetraisopropyl-4,4'-diaminodiphenylmethane, 3,5-dimethyl-3',5'-diisopropyl-4,4'-diaminophenylmethane, 3,5-diethyl-2,4-tolylenediamine, 3,5-diethyl-2,6-tolylenediamine (DETDA), 4,4'-methylenebis(3-chloro-2,6-diethylaniline), 3,5-dimethylthio-2,4-tolylenediamine, 3,5-dimethylthio-2,6-tolylenediamine, isobutyl 3,5-diamino-4-chlorobenzoate, or mixtures thereof, optionally in the presence of water, and optionally further auxiliaries and adjuvants.

**13.** Use of the polyurethane elastomers and polyurethaneurea elastomers according to Claim 11 or 12 for producing technical components.

**14.** Use of the polyurethane elastomers and polyurethaneurea elastomers according to Claim 11 or 12 as roll coating material or shoe press blankets, as pigs, pig disks, seals, pipe coatings, stiffening elements for pipes or cables, conveyor belts or screens, doctor blades, wheels, rollers, or potting compound.

**15.** Technical components, roll coatings, shoe press blankets, electrical castings, pigs, pig disks, seals, pipe coatings, stiffening elements for pipes or cables, doctor blades, wheels, rollers, conveyor belts or screens comprising the polyurethane elastomers and polyurethaneurea elastomers according to Claim 11 or 12.

**Revendications**

**1.** Polycarbonatepolyols dotés d'un indice d'OH de 40 à 80 mg de KOH/g selon la norme DIN 53240-1 de juin 2013 (sans catalyseur) et d'une fonctionnalité moyenne de 1,9 à 2,2 contenant le produit de transformation

A) d'au moins un $\alpha,\omega$-alcanediol comportant 4 à 8 atomes de C et
B) d'au moins un polytétrahydrofuranne et
C) de diéthylèneglycol
avec au moins
D) un composant de type carbonyle choisi dans le groupe constitué par des carbonates de diaryle, des carbonates de dialkyle, des carbonates d'alkylène cycliques et $COCl_2$, particulièrement préférablement le carbonate de diphényle et/ou leurs mélanges.

**2.** Polycarbonatepolyols selon la revendication 1, **caractérisés en ce que** l'au moins un $\alpha,\omega$-alcanediol comportant 4 à 8 atomes de C (A) est choisi dans le groupe constitué par le 1,4-butanediol, le 2-méthylpropanediol-1,3, le 1,5-pentanediol, le 3-méthylpentanediol-1,5, le 1,6-hexanediol et le 1,8-octanediol, préférablement le 1,6-hexanediol, et/ou leurs mélanges.

**3.** Polycarbonatepolyols selon la revendication 1 ou 2, **caractérisés en ce que** l'au moins un polytétrahydrofuranne (B) présente des poids moléculaires moyens en nombre dans la plage de 250 à 2 900 Da.

**4.** Polycarbonatepolyols selon la revendication 1, 2 ou 3, **caractérisés en ce que** le rapport molaire de groupes carbonate sur groupes éther se situe dans la plage de 0,2 : 1 à 3,5 : 1.

**5.** Polycarbonatepolyols selon la revendication 1, 2, 3 ou 4, **caractérisés en ce qu'**un maximum d'un endotherme de fusion déterminé au moyen de DSC selon la norme DIN EN ISO 11357-1 de mars 2010 à une vitesse de chauffage de 10 °C/min, pour une éprouvette stockée pendant plus de 4 semaines à température ambiante, se situe dans la plage de 9 à 59 °C.

**6.** Procédé pour la préparation de polycarbonatepolyols selon au moins l'une des revendications 1 à 5, **caractérisé en ce qu'**un procédé en deux étapes est appliqué, dans lequel dans une première étape un produit intermédiaire

A) d'au moins un $\alpha,\omega$-alcanediol comportant 4 à 8 atomes de C,
C) de diéthylèneglycol et
D) d'au moins un composant de type carbonyle choisi dans le groupe constitué par des carbonates de diaryle, des carbonates de dialkyle, des carbonates d'alkylène et $COCl_2$, particulièrement préférablement le carbonate de diphényle et/ou leurs mélanges

est préparé en présence d'un catalyseur et est transformé dans une deuxième étape avec
B) au moins un polytétrahydrofuranne.

7. Procédé selon la revendication 6, **caractérisé en ce que** dans la deuxième étape, en plus de

B) l'au moins un polytétrahydrofuranne,
pour compenser les diols A) et/ou C) partiellement éliminés dans la première étape,
A) au moins un α,ω-alcanediol comportant 4 à 8 atomes de C et/ou
C) du diéthylèneglycol
est ajouté.

8. Procédé selon la revendication 6, **caractérisé en ce que** dans la première étape les composants A) et/ou C) sont utilisés en excès en une quantité qui donne un écart de 2 à 20 unités d'un indice d'hydroxy par rapport à l'indice d'hydroxy visé en réalité.

9. Prépolymères de NCO à base des polycarbonatepolyols selon l'une quelconque des revendications 1 à 5.

10. Prépolymères de NCO selon la revendication 9 dotés d'une teneur en NCO de 3 à 15 % en poids pouvant être obtenus par transformation de polycarbonatepolyols selon l'une quelconque des revendications 1 à 5 avec au moins un polyisocyanate du groupe constitué par le 1,5-diisocyanate de naphtalène, le diisocyanate de 2,4'-diphénylméthane (2,4'-MDI), le diisocyanate de 4,4'-diphénylméthane (4,4'-MDI), ou leurs mélanges, des mélanges de 2,4'-MDI et de 4,4'-MDI ainsi que des dérivés de MDI modifiés par carbodiimide/urétonimine et des homologues à plus de noyaux de la série du diphénylméthane, des diisocyanates de toluène, le diisocyanate d'hexaméthylène, le diisocyanate d'isophorone ou leurs mélanges en excès molaire.

11. Élastomères de polyuréthane et élastomères de polyuréthanurée à base des prépolymères de NCO selon la revendication 9 ou 10.

12. Élastomères de polyuréthane et élastomères de polyuréthanurée pouvant être obtenus par transformation de prépolymères de NCO selon la revendication 9 ou 10 avec

(i) au moins un diol aliphatique comportant des groupes hydroxyle primaires et un poids moléculaire moyen en nombre de 62 à 202 et

en des quantités de 0 à 10 % en poids par rapport à l'au moins un diol aliphatique, des composés du groupe constitué par des polyols à chaîne courte comportant des fonctionnalités > 2 à 4 et
des polyols à poids moléculaire plus élevé dotés une fonctionnalité de 2 et des polycarbonatepolyols selon la revendication 1
éventuellement en présence d'eau et
éventuellement d'autres auxiliaires et adjuvants et/ou (ii) au moins un extenseur de chaînes diaminique aromatique du groupe constitué par 4,4'-méthylène-bis-(2-chloroaniline) (MBOCA), 3,3',5,5'-tétraisopropyl-4,4'-diaminodiphénylméthane, 3,5-diméthyl-3',5'-diisopropyl-4,4'-diaminophénylméthane, 3,5-diéthyl-2,4-toluylènediamine, 3,5-diéthyl-2,6-toluylènediamine (DETDA), 4,4'-méthylène-bis-(3-chloro-2,6-diéthylaniline), 3,5-diméthylthio-2,4-toluylènediamine, 3,5-diméthylthio-2,6-toluylènediamine, ester d'isobutyle d'acide 3,5-diamino-4-chlorobenzoïque ou leurs mélanges éventuellement en présence d'eau et éventuellement d'autres auxiliaires et adjuvants.

13. Utilisation des élastomères de polyuréthane et de polyuréthanurée selon la revendication 11 ou 12 pour la préparation de composants techniques.

14. Utilisation des élastomères de polyuréthane et de polyuréthanurée selon la revendication 11 ou 12 en tant que matériau de revêtement de rouleaux ou manteaux de presse à sabot, comme racleurs, disques de racleur, joints d'étanchéité, revêtements de tuyaux, éléments de rigidification pour des tubes ou des câbles, bandes de transport ou tamis, racles, roues, rouleaux ou masses électrocoulées.

15. Composants techniques, revêtements de rouleaux, manteaux de presse à sabot, pièces électrocoulées, racleurs, disques de racleur, joints d'étanchéité, revêtements de tuyaux, éléments de rigidification pour des tubes ou des câbles, racles, roues, rouleaux, bandes de transport ou tamis, contenant les élastomères de polyuréthane et de polyuréthanurée selon la revendication 11 ou 12.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3717060 A
- DE 102006002154 A1
- EP 0421217 A2

**In der Beschreibung aufgeführte Nicht-Patentliteratur**

- **M.D. LECHNER ; K. GEHRKE ; E.H. NORDMEIER.** Makromolekulare Chemie. Birkhäuser Verlag, 1993, 327
- **H. TANAKA ; M. KUNIMURA.** *Polymer Engineering and Science,* 2002, vol. 42 (6), 1333
- **G. OERTEL.** Polyurethane Handbook. Carl Hanser Verlag, 1994